# EUROPÄISCHE PATENTSCHRIFT

(11) **EP 1 933 167 B1**
(45) Veröffentlichungstag und Bekanntmachung des Hinweises auf die Patenterteilung: **12.06.2019**
(21) Anmeldenummer: 07119594.5
(22) Anmeldetag: 30.10.2007
(51) Int. Cl.: F16P 3/14, H04N 13/254, G06T 7/593, G06T 7/521, H04N 13/239, G01C 3/18, G01S 17/02, G01S 17/42, G01S 17/48, G01S 17/87, G01S 17/89, G01S 11/12

(54) **Optoelektronischer Sensor sowie Verfahren zur Erfassung und Abstandsbestimmung eines Objekts**
Optoelectronic sensor and method for detecting and determining the distance of an object
Capteur optoélectronique et procédé correspondant de détection et de détermination de la distance d'un objet

(30) Priorität: 15.12.2006 DE 102006059331; 04.07.2007 DE 102007031157
(43) Veröffentlichungstag der Anmeldung: 18.06.2008
(73) Patentinhaber: SICK AG, 79183 Waldkirch (DE)
(72) Erfinder: Wüstefeld, Martin, 79350 Sexau (DE)
(74) Vertreter: Ludewigt, Christoph

(56) Entgegenhaltungen:
- WO-A-01/71377
- DE-A1- 10 015 164
- DE-A1- 10 120 537
- DE-A1- 10 138 960
- DE-A1- 10 245 720
- JP-A- 2000 283 753
- US-A- 5 268 995
- US-A- 5 684 531
- US-A- 6 018 498
- US-B2- 6 522 284

## Beschreibung

Die Erfindung betrifft einen optoelektronischen Sensor zur Erfassung und Abstands-bestimmung eines Objekts nach dem Oberbegriff von Anspruch 1 sowie ein entsprechendes Verfahren nach dem Oberbegriff von Anspruch 8.

Eine kamerabasierte automatisierte Überwachung eines Raumbereichs wird in einer Vielzahl von Anwendungen benötigt. Hierzu zählen beispielsweise Diebstahlsicherung, Automatisierungstechnik oder Sicherheitstechnik. Für eine dreidimensionale ortsfeste Überwachung von Räumen kann die Stereoskopie verwendet werden. Dafür werden die Signale mindestens zweier Kameras, die in einem bekannten Abstand zueinander Bilder desselben Raumbereichs aufnehmen, zu dem dreidimensionalen Bild verrechnet.

Das Grundprinzip einer derartigen 3D-Rekonstruktion ist seit längerem bekannt. In den beiden aus unterschiedlichen Sichtwinkeln aufgenommenen Bildern wird nach verschiedenen Verfahren nach übereinstimmenden Bildmerkmalen gesucht. Aus der Lage dieser Bildmerkmale in den beiden aufgenommenen Bildern kann deren Abstand zueinander als sogenannte Disparität und daraus mithilfe des Abstands der beiden Kameras zueinander die Entfernung des dem Bildmerkmal entsprechenden Objekts berechnet werden.

Die exakte Positionsbestimmung und die Detektion von Objekten kann also nur im gemeinsamen Sichtbereich beider Kameras erfolgen. Es bietet sich daher an, den Abstand der beiden Kameras zueinander gering zu halten, damit der gemeinsame überwachte Raumbereich möglichst groß und einfach zu bestimmen ist. Ist nämlich der Basisabstand zwischen beiden Kameras groß, so ist der resultierende gemeinsame Sichtbereich eine komplizierte Überlagerung zweier Pyramiden, welche die Bestimmung des überwachten Raumbereichs erschwert.

Eine sichere 3D-Positionsbestimmung verlangt neben den entsprechenden Stereoskopie-Algorithmen eine verlässliche geometrische Anordnung zwischen den und intern innerhalb der beiden Kameramodule sowie eine kontrastreiche Szene, um ein Bild überhaupt auswerten zu können.

Eine übliche Anwendung in der Sicherheitstechnik schützt Bedienpersonal vor einer Gefahr wie beispielsweise einer gefährlichen Maschine. Wird nach Auswertung des Stereoskopiebilds erkannt, dass ein Objekt dem Gefährdungsbereich zu nahe kommt, so wird die Maschine automatisch abgeschaltet. Gerade bei diesen Anwendungen können Erkennungsfehler nicht toleriert werden. Sämtliche bekannten Stereoskopie-Algorithmen tragen aber die Gefahr in sich, einen falschen Objektabstand zu bestimmen. Darüber hinaus würde eine Manipulation der beiden Kameras, welche den Abstand oder den Sichtwinkel verändert, sich ebenfalls in einem falschen Objektabstand niederschlagen.

Mit den herkömmlichen Verfahren kann daher die Stereoskopie in der Sicherheitstechnik nur eingeschränkt eingesetzt werden, solange nicht sichergestellt werden kann, dass die entscheidenden Abbildungseigenschaften, die Bewertungsschaltschwellen und die relativen geometrischen Anordnungen zwischen den Kameras zuverlässig sind. Diese Anforderungen steigen mit der geforderten Sicher-heitsklasse.

Eine dreidimensionale Raumüberwachung ist herkömmlich auch mithilfe eines Scanners möglich. Solche Scanner benötigen aber eine relativ hohe Auswertungszeit für einen dreidimensionalen Raumbereich. Die benötigten mechanisch betriebenen Teile für die Scannerbewegung begrenzen außerdem die Lebenserwartung und verursachen verhältnismäßig hohe Kosten.

Neben der Stereoskopie sind weitere dreidimensionale Kameraverfahren bekannt. Dazu zählt das sogenannte "Time of Flight"-Verfahren, bei dem die Laufzeit eines Lichtpulses von Beleuchtung zu Objekt zu Kamera bestimmt wird. Hier unterscheidet man wiederum zwischen einem Pulslaufzeitverfahren, bei dem direkt die Laufzeit eines kurzen Lichtpulses bestimmt wird und phasenbasierten Verfahren, bei denen die Phasenverschiebung modulierten Lichts ausgewertet wird. Probleme bei der Laufzeitbestimmung ergeben sich bei Mehrfachreflexionen, welche die Laufzeiten verfälschen können. Bei den phasenbasierten Verfahren besteht zusätzlich ein Problem darin, dass mit nur einer Modulationsfrequenz, wie sie üblicherweise verwendet wird, der Eindeutigkeitsbereich begrenzt ist.

Deshalb sind zwar in jüngerer Zeit Matrixempfänger verfügbar, die in jedem Pixel neben dem Grau- oder Farbwert auch einen Entfernungswert aus einer Laufzeitmessung liefern. Das kostengünstigste Verfahren ist die sogenannte Photonmischdetektion (PMD), welche mit einer Ladungsschaukel auf CMOS-Basis kostengünstige Matrixsensoren ermöglicht. Die Präzision und Verlässlichkeit der Abstandsbestimmung ist aber für sicherheitstechnische Anwendungen noch nicht ausreichend.

Bei einem weiteren Verfahren, der Triangulation, wird der mit der Entfernung auf dem Bildsensor wandernde reflektierte Lichtpunkt ausgewertet. Es sind keine Konzepte bekannt, welche die Funktionsfähigkeit und Zuverlässigkeit dieser Verfahren sicherstellen.

In der DE 100 15 164 A1 wird ein Kommunikationsverfahren mit einem ROSAR-Gerät offenbart. Dabei ist ein HeliRadar und ein Laser-Radar vorgesehen, deren Daten fusioniert und zur bildhaften Wahrnehmung von Flugweg und Landeplatz in einem Display eines virtuellen Cockpits sichtbar gemacht werden. In einer ähnlichen Offenbarung werden in der DE 101 20 537 A1 die Daten eines HeliRadars, eines Laser-Radars und zweidimensionaler Wärmebildgeräte und Videokameras fusioniert.

Aus der DE 101 38 960 A1 ist eine Überwachungsvorrichtung mit zwei Bildsensoren bekannt. Dabei wird das dreidimensionale Bild aus Helligkeitsunterschieden zwischen den beiden unterschiedlich empfindlich eingestellten Bildsensoren berechnet. Zusätzlich kann jedes der beiden aufgenommenen Einzelbilder der Einzelkameras mit einer Referenz verglichen werden. Dieses Verfahren erhöht somit durch Redundanz die Sicherheit, korrigiert aber nicht die aus dem dreidimensionalen Bild bestimmten Entfernungen, da die Einzelbildauswertung rein zweidimensional ist. Damit sind Anwendungen, bei denen nicht die bloße Objekterkennung, sondern erst die Unterschreitung eines Mindestabstands zu einer Warnung beziehungsweise zu einem Abschalten führen sollen, nicht verbessert.

Die EP 1 543 270 B1 offenbart eine stereoskopische Raumbereichsüberwachung, bei der die Objekterkennung in dem erzeugten dreidimensionalen Bild mit zwei parallel implementierten Auswertungsalgorithmen erfolgt. Somit ist die Sicherheit auch hier durch Redundanz erhöht, da ein Fehler bei der Szenenanalyse des einen Algorithmus durch den anderen ausgeglichen werden kann. Auch dieses Verfahren hilft zur Abstandskorrektur aber nicht weiter, da die unterschiedlichen Algorithmen mit einer Szenenanalyse des Stereoskopiebilds ansetzen. Das Stereoskopiebild ist aber bereits durch dreidimensionale Rekonstruktion mittels Disparitätsschätzung erzeugt. Fehler bei der Disparitätsschätzung können daher nicht ausgeglichen werden.

Es ist daher Aufgabe der Erfindung, eine dreidimensionale Raumüberwachung mit einer zuverlässigen Objekterkennung und einer zuverlässigen Abstandsbestimmung erkannter Objekte zu schaffen.

Diese Aufgabe wird durch einen optoelektronischen Sensor gemäß Anspruch 1 sowie ein Verfahren zur Erfassung und Abstandsbestimmung eines Objekts gemäß Anspruch 8 gelöst. Die erfindungsgemäße Lösung hat den Vorteil, dass zwei vollständig voneinander unabhängige Verfahren zur Objekterkennung und Abstandsbestimmung miteinander kombiniert werden und somit die Sicherheit und Zuverlässigkeit des Sensors sichergestellt ist. Diese beiden Verfahren beruhen nicht nur auf unterschiedlichen Algorithmen, sondern auf physikalisch unterschiedlichen Messprinzipien. Daher können sie gegenseitige Schwächen ausgleichen und somit die Sicherheit des Sensors beträchtlich erhöhen. Zudem ist es in vielen Situationen auch möglich, dass der Sensor eigenständig erkennt, wenn eines der Messprinzipien zu vergleichsweise guten oder schlechten Ergebnissen führen wird. Ein Beispiel ist die Korrespondenz zweier Objekte bei der Stereoskopie, wenn die Szenerie sehr kontrastschwach ist. Aus solchen und ähnlichen Überlegungen kann neben dem dreidimensionalen Bild auch ein Verlässlichkeitsmaß errechnet werden und jeweils das Messprinzip, das aktuell die besseren Ergebnisse liefert, entsprechend höher gewichtet werden. Diese Mischform verschiedener Messprinzipien führt zu erheblicher Verbesserung der Genauigkeit der dreidimensionalen Bild-daten.

Die erfindungsgemäße Lösung geht dabei von dem Prinzip aus, ein erzeugtes dreidimensionales Bild durch ein unabhängiges zweites Verfahren zu überprüfen und zu verbessern. Dabei soll dieses zweite Verfahren mit möglichst geringem zusätzlichem Aufwand umgesetzt werden.

Der Sensor ist für die Anwendung zweier unterschiedlicher Messprinzipien ausgebildet, nämlich:
- es ist mindestens ein erster und ein zweiter Bildsensor vorgesehen, die jeweils den Überwachungsbereich als ein erstes und zweites Bild abbilden können und die Auswertungseinheit weist eine Stereoskopie-Auswertungseinheit auf, die aus dem ersten und dem zweiten Bild ein dreidimensionales Stereoskopiebild des Überwachungsbereichs erzeugen kann, und
- es ist eine Beleuchtung für die Erzeugung eines strukturierten Beleuchtungsmusters vorgesehen und die Auswertungseinheit weist eine Triangulations-Auswertungseinheit auf, die aus den Daten des Bildsensors ein dreidimensionales Triangulationsbild des Überwachungsbereichs erzeugen kann.

Daneben ist auch eine Ausführungsform denkbar, bei der zusätzlich das folgende Messprinzip zum Einsatz kommt:
- es ist eine Beleuchtung vorgesehen, der Bildsensor ist dafür ausgebildet, die Lichtlaufzeit von der Beleuchtung über das Objekt zu dem Bildsensor zu bestimmen, und die Auswertungseinheit weist eine Lichtlaufzeit-Auswertungseinheit auf, die aus den Daten des Bildsensors ein dreidimensionales Lichtlaufzeitbild des Überwachungsbereichs erzeugen kann.

Wie einleitend beschrieben, gibt es für jedes Messprinzip Situationen, in denen die Abstandsbestimmung unzuverlässig wird. Dies kann durch Auswahl geeigneter Messprinzipien ausgeglichen werden.

Es werden also als die beiden Messprinzipien die Stereoskopie und die aktive Triangulation eingesetzt. Dabei können auch geometrische Lageänderungen zwischen den beiden Kameras wie etwa die Änderung des Basisabstands der beiden Kameras zueinander sowie auch innerhalb einer Kamera wie beispielsweise der Abstand zwischen Objektiv und Bildebene oder eine Veränderung des Objektivs erkannt werden. Da die Abstandsbestimmung sich nicht alleine auf eine Disparitätsschätzung verlässt, sondern zusätzlich das unabhängige Verfahren einer Triangulation verwendet, werden verlässliche Objektabstände ermittelt, die eine Warnung oder ein Abschalten nicht schon auf bloße Objekterkennung hin, sondern auch auf Unterschreitung eines Abstandes hin ermöglicht. Damit können wesentlich flexiblere Überwachungsbereiche und Kriterien für einen unerlaubten Objekteingriff umgesetzt werden. Das strukturierte Beleuchtungsmuster dient nicht nur der Triangulation, sondern auch der Ausleuchtung des Überwachungsbereichs, so dass die beiden aufgenommenen Bilder für die Disparitätsschätzung hinreichend kontraststark sind. Durch Kombination der aus Triangulation und Disparitätsschätzung ermittelten Entfernungswerte kann die Messgenauigkeit verbessert werden.

Es sei angemerkt, dass in der Literatur auch die auf einer Stereokamera basierende 3D-Rekonstruktion bisweilen als "Triangulation" bezeichnet wird. Im Sinne der Erfindung bedeutet (aktive) Triangulation aber das Verfahren mit einer Kamera, wobei die Entfernungen, wie später noch beschrieben, gegenüber einer Beleuchtung bestimmt werden. Das schließt selbstverständlich nicht aus, dass auch für die Disparitätsschätzung der zwei Kamerabilder triangulierende Algorithmen verwendet werden, um die Entfernung der als übereinstimmend gefundenen Bild-elemente aus dem Abstand der Kameras zu berechnen.

Vorteilhafterweise dient der Überwachungsbereich der Absicherung eines Gefahrenbereichs oder einer Maschine und die Erkennungseinheit erzeugt auf eine Objekterfassung hin ein Warnsignal oder ein Abschaltsignal an die Maschine, wenn der Abstand einen Mindestabstand unterschreitet oder wenn die mit dem ersten und dem zweiten Messprinzip aus den ersten und den zweiten dreidimensionalen Bilddaten bestimmten Abstände voneinander weiter als um eine vorgegebene Toleranz abweichen. Der Sensor schafft somit einen Schutzbereich in einem vorgegebenen Abstand um den Sensor, in den ein Objekt nicht eindringen darf. Ein möglicher Fehler bei der Erzeugung des einen dreidimensionalen Bilds kann anhand des anderen dreidimensionalen Bilds auf Plausibilität überprüft werden.

Bevorzugt erzeugen Bildsensor und Auswertungseinheit im Betrieb die ersten dreidimensionalen Bilddaten mit einer ersten Rate und die zweiten dreidimensionalen Bilddaten nur einmalig zur Testung bei Inbetriebnahme des Sensors. Bei dieser Ausführungsform wird nicht in erster Linie die Zuverlässigkeit der dreidimensionalen Bildauswertung überprüft, sondern die Funktionsfähigkeit des Bildsensors. Im weiteren Betrieb wird dann zur Beschleunigung der Auswertung auf die doppelte dreidimensionale Bildberechnung verzichtet.

Alternativ erzeugen Bildsensor und Auswertungseinheit im Betrieb die ersten dreidimensionalen Bilddaten mit einer ersten Rate und die zweiten dreidimensionalen Bilddaten mit einer zweiten Rate kleiner der ersten Rate zur zyklischen Testung. Bei dieser Ausführungsform überprüfen sich also die beiden Messprinzipien gegenseitig zyklisch. Dabei wird zur Begrenzung des Rechenaufwands bei dieser vorteilhaften Ausführungsform nicht in jedem Auswertungszyklus die doppelte dreidimensionale Bildberechnung vorgenommen.

Dabei ist bevorzugt die zweite Rate dynamisch an das Verlässlichkeitsmaß angepasst. Beispielsweise kann der Disparitätsschätzung ein Maß für die Wiedererkennung eines Bildmerkmals des einen Bilds in dem anderen Bild zugeordnet werden. Zeigt dieses Maß, dass die Disparitätsschätzung gut ist, so muss weniger oft auf Plausibilität geprüft werden, als wenn bekannt ist, dass die Disparitätsschätzung bei dem aktuellen Stereoskopiebild Erkennungsprobleme hatte. Ähnliche Verlässlichkeitsmaße lassen sich für Lichtlaufzeitverfahren aus hoher Remission der aktuellen Szenerie, welche die Gefahr von Mehrfachreflexionen erhöht, oder für die Triangulation etwa aus dem Kontrast des aktuellen Bilds berechnen.

Das Beleuchtungsmuster der Beleuchtung für die Erzeugung eines strukturierten Beleuchtungsmusters ist bevorzugt eines der Folgenden: eine Vielzahl von insbesondere matrixförmig angeordneten Punkten oder Kreisen, eine Vielzahl von Linien, ein Gittermuster oder ein Schachbrett. Derartige Muster sind besonders kontraststark und helfen sowohl bei der Stereoskopie als auch bei der Triangulation und in ihrer Regelmäßigkeit vereinfachen die Muster die Auswertung bei der Triangulation.

Bevorzugt ist die Beleuchtungsquelle außerhalb der Achse zwischen erstem und zweitem Bildsensor angeordnet. Dadurch entsteht eine große Triangulationsbasis, die eine höhere Messgenauigkeit für die Stereoskopie ermöglicht.

Vorteilhafterweise weist die Beleuchtungsquelle mindestens einen Laser oder mindestens eine Leuchtdiode als Lichtquelle auf. Diese Beleuchtungsquelle schafft ein hinreichend kontraststarkes Beleuchtungsmuster.

Bevorzugt ist der Lichtquelle ein diffraktives optisches Element zur Erzeugung des Beleuchtungsmusters nachgeordnet. Ein solches diffraktives optisches Element ist kostengünstig herzustellen und kann jedes beliebige Beleuchtungsmuster aus einer einfachen Lichtquelle erzeugen.

In einer weiteren Ausführungsform der Erfindung ist als Lichtquelle ein Laserstack vorgesehen, der eine Vielzahl in einer ersten Achse nebeneinander liegender Laserstrahlen erzeugen kann, wobei jedem Laserstrahl jeweils ein oder ein gemeinsames diffraktives optisches Element zugeordnet ist, das in einer zweiten Achse im Wesentlichen senkrecht zu der ersten Achse jeweils einen Streifen des Beleuchtungsmusters erzeugt. Der Laserstack kann eine höhere Leistung abgeben als ein einzelner Laser. Diese wird durch die jeweiligen diffraktiven optischen Elemente in einfacher Weise gleichmäßig auf das Beleuchtungsmuster verteilt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Ausführungsform des erfindungsgemäßen Sensors und dessen Überwachungsbereichs auf Basis von Stereoskopie und Triangulation;
- Fig. 2: eine schematische Darstellung zur Erläuterung des Triangulationsverfahrens;
- Fig. 3: ein Ablaufdiagramm des erfindungsgemäßen Verfahrens zur Erfassung und Abstandsbestimmung eines Objekts nach der ersten Ausführungsform;
- Fig. 4: eine schematische dreidimensionale Darstellung eines weiteren beispielhaften Sensors und dessen Überwachungsbereichs auf Basis von Stereoskopie und einem Lichtlaufzeitverfahren;
- Fig. 5: ein Ablaufdiagram des erfindungsgemäßen Verfahrens zur Erfassung und Abstandsbestimmung eines Objekts in einem Sensor gemäß Figur 4;
- Fig. 6: eine schematische dreidimensionale Darstellung eines weiteren beispielhaften Sensors und dessen Überwachungsbereichs auf Basis eines Lichtlaufzeitverfahrens und Triangulation;
- Fig. 7: ein Ablaufdiagram des erfindungsgemäßen Verfahrens zur Erfassung und Abstandsbestimmung eines Objekts in einem Sensor gemäß Figur 6.

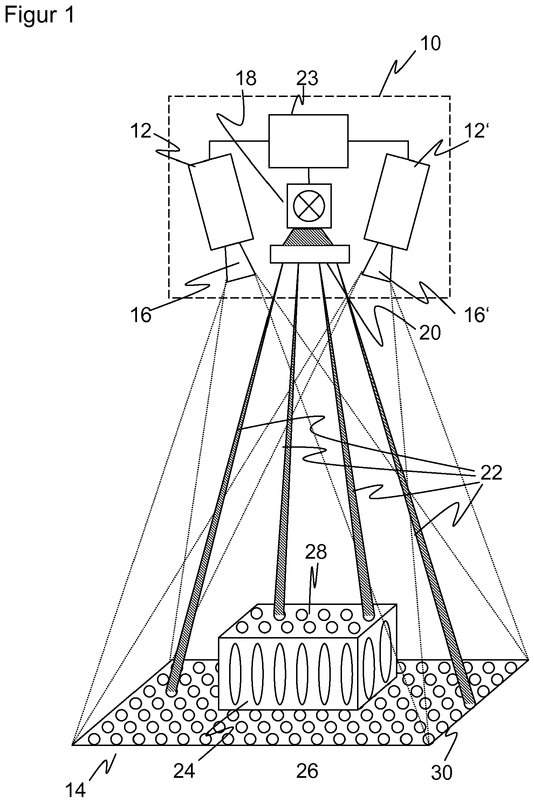

Figur 1 zeigt in einer schematischen dreidimensionalen Darstellung den Aufbau einer ersten Ausführungsform des erfindungsgemäßen Sensors 10 auf Basis von Stereoskopie und Triangulation. Zwei Kameramodule 12, 12' sind in einem bekannten festen Abstand zueinander montiert. Beide Kameras 12, 12' nehmen jeweils das Bild eines Überwachungsbereichs 14 auf. Die Kameras 12, 12' weisen ein nur angedeutetes Objektiv 16, 16' mit einer abbildenden Optik auf. Der Sichtwinkel dieser Optik ist in Figur 1 durch gestrichelte Linien dargestellt, die jeweils eine Sichtpyramide bilden und beträgt erfindungsgemäß beispielsweise 45°. In jeder Kamera 12, 12' ist ein nicht dargestellter Bildsensor vorgesehen. Dieser Bildsensor ist ein matrixförmiger Aufnahmechip, der ein rechteckiges Pixelbild aufnimmt und kann beispielsweise ein CCD- oder ein CMOS-Sensor sein.

In der Mitte zwischen den beiden Kameras 12, 12' ist eine Beleuchtungsquelle 18 angeordnet. Als Lichtquelle für die Beleuchtungsquelle 18 dient ein Laser mit einer Leistung zwischen 20 und 100 mW. Die Laserleistung kann auch 1 W oder noch mehr betragen, sofern die Schutzklasse dies zulässt und die höheren Kosten in Kauf genommen werden. Alternativ ist auch der Einsatz einer oder mehrerer LEDs vorstellbar.

Der Beleuchtungsquelle 18 ist in der optischen Achse ein diffraktives optisches Element 20 nachgeordnet, um in dem Überwachungsbereich 14 ein Beleuchtungsmuster zu erzeugen. Die Beleuchtungsquelle 18 erzeugt Licht einer vorgegebenen und bekannten Wellenlänge, die im sichtbaren, ultravioletten oder infraroten Bereich liegen kann. Selektiv für diese Wellenlänge lenkt das diffraktive optische Element 20 das von der Beleuchtungsquelle 18 einfallende Licht nur in bestimmte Bereiche des Überwachungsbereichs 14 ab. Dies ist in der Figur 1 beispielhaft durch einige Lichtbündel 22 dargestellt. Weitere nicht dargestellte Lichtbündel 22 erzeugen ebenfalls jeweils einen Punkt. Das entstehende Beleuchtungsmuster in dieser Ausführungsform ist ein regelmäßiges, also matrixförmig angeordnetes, Punkt- beziehungsweise Kreismuster.

Mit einem anderen diffraktiven optischen Element 20 können auch andere Beleuchtungsmuster erzeugt werden. Dabei ist jedes beliebige Muster erzeugbar, für die Auswertung hilfreich und kontraststark ist neben dem dargestellten Kreismuster ein Linienmuster, ein Schachbrettmuster oder ein Gitter. Prinzipiell kann statt eines diffraktiven optischen Elements 20 auch eine Maske verwendet werden. Dies ist aber weniger vorteilhaft, da ein Teil der eingestreuten Lichtenergie in der Maske verloren geht.

Der Laser der Beleuchtungsquelle 18 erzeugt Pulse einer Länge von 1-10 ms. Das Punktmuster im Überwachungsbereich 14, das durch das diffraktive optische Element 20 erzeugt wird, sollte etwa eine Leistung von 0,1 mW je Punkt haben. Je nach Leistung des Lasers sollte daher eine Höchstzahl an Punkten nicht überschritten werden.

In einer Ausführungsform der Erfindung ist als Beleuchtungsquelle 18 ein Laserstack vorgesehen. Der Laserstack erzeugt mehrere auf einer Linie liegende Lichtstrahlen. Jeder dieser Lichtstrahlen kann anschließend durch ein diffraktives optisches Element 20 oder durch eine Vielzahl von nebeneinander liegenden diffraktiven optischen Elementen 20 zu dem Beleuchtungsmuster geformt werden. Somit entsteht das Muster in zwei Stufen: der Laserstack zieht die Beleuchtung in einer ersten Achse auseinander, das diffraktive optische Element 20 formt aus dieser Beleuchtung in der ersten Achse in einer zweiten, im Wesentlichen zu der ersten Achse senkrechten Achse, jeweils einen Streifen des gewünschten Beleuchtungsmusters.

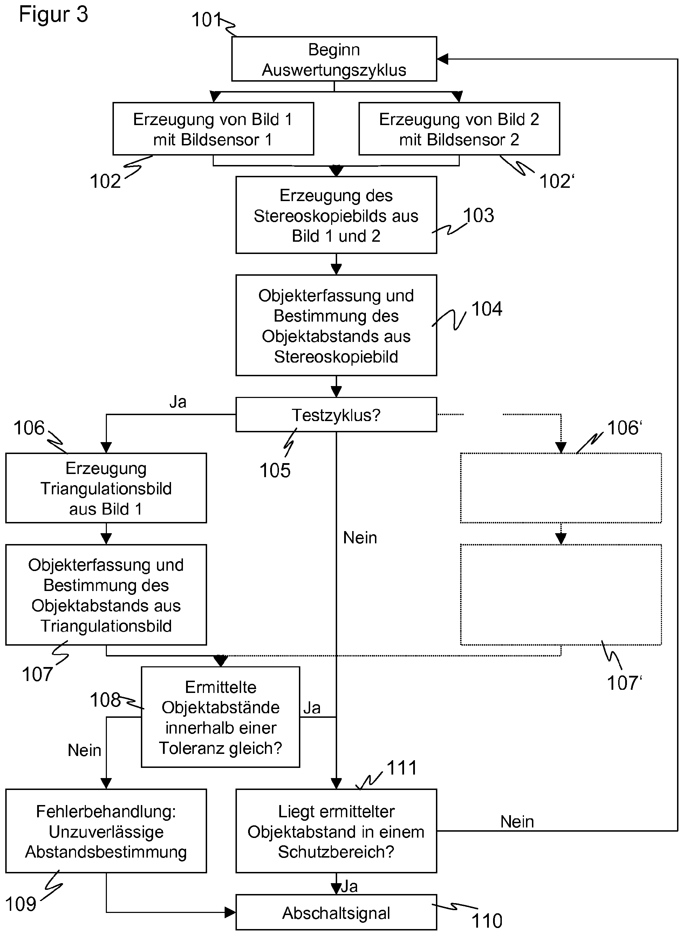

Mit den beiden Kameras 12, 12' und der Beleuchtungsquelle 18 ist eine Steuerung 23 verbunden. Die Steuerung 23 schaltet die Lichtpulse der Beleuchtungsquelle 18 und empfängt Bildsignale von den beiden Kameras 12, 12'. Das Auswertungsverfahren in der Steuerung 23 wird weiter unten im Zusammenhang mit Figur 3 beschrieben.

Ein zu erfassendes Objekt 24 ist in Figur 1 vereinfacht als Quader dargestellt. An den Seitenflächen des Objekts 24 wird das Beleuchtungsmuster verzerrt, was hier eher symbolisch als darstellungsgetreu durch langgezogene Ellipsen 26 dargestellt ist. Die Form dieser Ellipsen 26 hängt natürlich von der Schrägstellung des Objekts 24 gegenüber dem Sensor 10 ab.

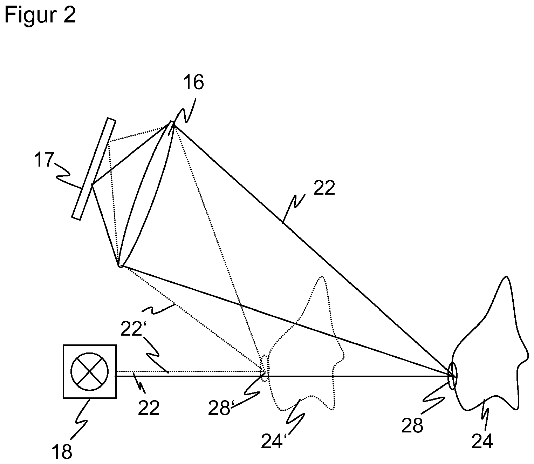

Die Erfassung des Objekts 24 durch den Sensor 10 erfolgt durch zwei unterschiedliche dreidimensionale Abbildungsverfahren. In einem ersten Abbildungsverfahren werden die beiden Einzelbilder der Kameras 12, 12' mithilfe einer Disparitätsschätzung zu einem stereoskopischen dreidimensionalen Bild vereint. Derartige stereoskopische Bildgebungsverfahren sind von den beiden menschlichen Augen inspiriert und seit Längerem bekannt. Dafür wird die scheinbare durch die unterschiedliche Perspektive der beiden Kameras 12, 12' entstandene Verschiebung von Bildmerkmalen in den beiden Bildern (Parallaxe) mit dem bekannten Abstand der beiden Kameras 12, 12' untereinander zu einer Entfernungsschätzung des Bildmerkmals verrechnet. Man kann statistische Maße für die Übereinstimmung der den Bildmerkmalen entsprechenden Bildausschnitte definieren und damit ein Verlässlichkeitsmaß für die Disparitätsschätzung erhalten. Das zweite Abbildungsverfahren mittels Triangulation soll nunmehr anhand der Figur 2 kurz skizziert werden. Dargestellt ist ein um 90° gekippter Ausschnitt der Figur 1. Die Beleuchtungsquelle 18 sendet einen Lichtstrahl 22, der von dem Objekt 24 an einem Beleuchtungspunkt 28 remittiert wird. Die Kamera 12, von der nur eine Linse 16 als Objektiv und der Bildsensor 17 dargestellt ist, empfängt dieses remittierte Licht und wandelt es in ein Signal um. Wie man anhand eines näheren Objekts 24' erkennt, wird das remittierte Licht 22', das einen Beleuchtungspunkt 28' auf dem Objekt 24' erzeugt, durch die Linse 16 entfernungsabhängig auf dem Bildsensor 17 abgebildet.

Somit trägt der Empfangsort auf dem Bildsensor 17 die Information über die Entfernung des Objekts 24, 24'. Daraus lässt sich bei bekanntem Abstand zwischen Beleuchtungsquelle 18 und Bildsensor 17 unabhängig von der stereoskopischen Auswertung ein dreidimensionales Bild bereits mittels nur einer Kamera 12 oder 12' erzeugen. Dazu muss aber die Steuerung 23 die Geometrie genau kennen. Sie muss wissen, welchen Lichtstrahl 22 sie auswertet. Dessen Lage im Raum kennt die Steuerung 23, weil er durch die feste Anordnung von Beleuchtung 18, diffraktivem optischen Element 20 und Bildsensor 17 vorgegeben ist. Auszuwerten ist danach nur noch eine Mehrdeutigkeit, weil dem Bild eines Beleuchtungspunkts 28 nicht unmittelbar anzusehen ist, welcher Punkt der Beleuchtungsmatrix es ist und welchem Lichtstrahl 22 er somit zugehört.

Dazu verhilft aber wiederum das Gesamtbild auf dem Bildsensor 17. Dort sind sämtliche Punkte der Beleuchtung abgebildet. Sie können verzerrt und in ihrer Entfernung untereinander verschoben sein, denn diese Anordnung hängt davon ab, in welcher Entfernung sich das Objekt befindet, an dem die einzelnen Punkte remittiert werden. Lichtstrahlen 22 zu verschiedenen Punkten 28 können sich aber unter keinen Umständen überkreuzen. Somit kann jeder Punkt in dem Abbild zweifelsfrei identifiziert werden (Ein Punkt etwa an Matrixposition 4; 6 in der Beleuchtungsmatrix befindet sich immer an dieser relativen Position, auch wenn seine absolute Position entfernungsabhängig schwankt). Ist der Punkt erst einmal identifiziert, so ist wegen der festen Geometrie in dem Sensor 10 auch die Aussendungsrichtung des zugehörigen Lichtstrahls 22 bekannt. Damit reduziert sich die Triangulation für diesen Punkt auf den Fall, der in Figur 2 dargestellt ist. Statt einer Bildauswertung mit Erkennung eines Objekts werden also nur Strukturen des Beleuchtungsmusters auf dem Bildsensor 17 gesucht. Es ist möglich, nur bestimmte Punkte des strukturierten Beleuchtungsmusters auszuwerten, um für einen beschleunigten Test an nur diesen Punkten die Plausibilität der Disparitäts-schätzung zu überprüfen.

In einer alternativen Ausführungsform der Erfindung kann die Beleuchtungsquelle 18 anders als mittig zwischen den Kameras 12, 12' und auch außerhalb der Verbindungsachse zwischen den Kameras 12, 12' angeordnet sein. Das hat einen großen Vorteil, weil die Beleuchtungsquelle 18 die Triangulationsbasis für das Triangulationsverfahren festlegt. Ist diese Triangulationsbasis gegenüber der Perspektive der Stereokamera 12, 12' verschoben, so kann durch Kombination der unterschiedlich bestimmten Entfernungen die Messgenauigkeit erheblich verbessert werden. Außerdem ist dann der Abstand zwischen Beleuchtungsquelle 18 und Kameras 12, 12' nicht mehr durch die Distanz zwischen den Kameras 12, 12' begrenzt. Die Triangulationsbasis kann damit auch groß werden, was schon die Messgenauigkeit der Triangulation allein verbessert. Durch Kombination der ermittelten Entfernungen aus den beiden Verfahren Disparitätsschätzung und Triangulation wird die Messgenauigkeit dann nochmals erhöht.

Anhand der Figur 3 wird nunmehr das Auswertungsverfahren in der Steuerung 23 erläutert. In einem ersten Schritt 101 beginnt ein Auswertungszyklus. Dies kann unter anderem die Inbetriebnahme des Sensors 10 oder ein durch die Bildwiederholungsrate der Kameras 12, 12' definierter Zyklus sein. In einem Schritt 102, 102' erzeugt jede der Kameras 12, 12' ein erstes beziehungsweise zweites Bild des Überwachungsbereichs 14. In einem Schritt 103 wird aus dem ersten und dem zweiten Bild wie oben beschrieben ein dreidimensionales Stereoskopiebild erzeugt.

In dem Stereoskopiebild wird in einem Schritt 104 mit an sich bekannten Verfahren eine Objekterfassung durchgeführt. Dies kann z.B. durch Vergleich mit einem zuvor aufgenommenen Referenzbild des Überwachungsbereichs 14 erfolgen. Es sind weitere Verfahren bekannt, die auf Konturen, unter Einbeziehung früherer Bilder auf Bewegungsabläufe, auf bestimmte Farben oder sonstige markante Merkmale des Stereoskopiebilds reagieren. Ist ein Objekt erst einmal erfasst, so ist auch der Objektabstand bekannt, denn das Stereoskopiebild ist dreidimensional und enthält die über die Disparitätsschätzung aus der Parallaxe bestimmte Tiefeninformation.

In einem Schritt 105 wird entschieden, ob sich ein Testzyklus anschließen soll. Ein solcher Testzyklus kann nur einmalig bei Inbetriebnahme des Sensors 10 vorgesehen sein, um festzustellen, ob der Sensor 10 an sich noch betriebsbereit ist. Damit werden also in erster Linie geometrische Veränderungen der Anordnungen der Kameras 12, 12' und ähnliche Systemfehler erkannt, die weniger mit Schwierigkeiten bei der Erzeugung der dreidimensionalen Bilder zu tun haben. Alternativ kann ein Testzyklus in jedem Auswertungszyklus vorgesehen sein. Schließlich ist als weitere Alternative denkbar, den Testzyklus mit einer bestimmten Rate abhängig vom Auswertungszyklus durchzuführen, also beispielsweise jeden zweiten oder jeden dritten Auswertungszyklus. Eine der aktuellen Szenerie im Überwachungsbereich 14 besser angepasste Testrate nutzt das Verlässlichkeitsmaß bei der Erzeugung des Stereoskopiebilds aus. Wenn die Verlässlichkeit hoch ist, muss weniger oft getestet werden, als wenn sie niedrig ist. So könnte ein Testzyklus immer dann ausgeführt werden, wenn die Verlässlichkeit eine Schwelle unterschreitet oder die Testrate könnte eine beliebige vorgegebene Funktion der Verlässlichkeit sein.

Soll ein Test durchgeführt werden, so wird in einem Schritt 106 ein weiteres dreidimensionales Bild aus dem ersten Bild der Kamera 12 erzeugt. Dieses Bild ist also kein stereoskopisches Bild, sondern entsteht durch Triangulation, wie sie anhand der Figur 2 erläutert worden ist. In einem Schritt 107 wird in dem Triangulationsbild ein Objekt erfasst und dessen Abstand bestimmt.

Die Triangulationsauswertung ist meist grober als die stereoskopische Auswertung. Sie kann durch entsprechende Beleuchtungsmuster feiner gemacht werden, erreicht aber zumindest dann nicht die Disparitätsschätzung, wenn man Bildsensoren mit den technisch problemlos herstellbaren Auflösungen mit Millionen von Pixeln verwendet. Ein strukturiertes Beleuchtungsmuster dieser Auflösung ist nicht mehr zuverlässig zu erzeugen und durch Triangulation auszuwerten.

Die Triangulationsauswertung sucht nach Schwerpunkten in der Intensitätsverteilung, welche Strukturen in dem Beleuchtungsmuster entsprechen. Dadurch wird also die Lage des Beleuchtungsmusters auf Objekten im Raum und nicht die der Objekte selbst bestimmt. Dennoch ist klar, dass der Abstand des Beleuchtungs-musters auch einem Objekt entsprechen muss, da das Beleuchtungsmuster ansonsten an der ermittelten Stelle nicht entstanden wäre.

In einem Schritt 108 wird nun für jedes Objekt verglichen, ob der ermittelte Abstand bei beiden Verfahren gleich ist. Es wird also der aus dem Stereoskopiebild und der aus dem Triangulationsbild ermittelte Objektabstand verglichen. Ergibt dieser Vergleich innerhalb einer gewissen vorgegebenen Toleranz eine Abweichung, so wird in einem Schritt 109 eine Fehlerbehandlung gestartet. Die Abweichung bedeutet nämlich, dass die Abstandsbestimmung unzuverlässig geworden ist. Es ist nicht plausibel, dass zwei Algorithmen, die denselben Objektabstand messen sollen, zu unterschiedlichen Ergebnissen kommen. In der Sicherheitstechnik führt dies unmittelbar zu einem Abschaltsignal 110 an eine von dem Sensor 10 geschützte Maschine. In anderen Anwendungen könnte man sich überlegen, ob die Abweichung lediglich gespeichert wird und beispielsweise erst bei wiederholtem Abweichen der Objektabstände in weiteren Auswertungszyklen ein Warnsignal erzeugt wird.
Alternativ zu den Objektabständen können auch sämtliche ermittelten Abstände überprüft werden, also auch Abstände bis zu einem Hintergrund 30 des Überwachungsbereichs 14. Dies kann das gesamte Stereoskopiebeziehungsweise Triangulationsbild betreffen oder zur beschleunigten Auswertung lediglich ausgewählte helle Punkte des strukturierten Beleuchtungsmusters.

Ergibt der Vergleich im Schritt 108, dass die Objektabstände innerhalb der Toleranz gleich sind, so wird in einem Schritt 111 überprüft, ob der ermittelte Objektabstand innerhalb eines Schutzbereichs liegt. Im einfachsten Fall bedeutet dies, dass ein Objekt dem Sensor 10 höchstens auf eine bestimmte Entfernung nahekommen darf. Es können aber auch für ein komplizierteres Schutzfeld ortsabhängige Abstandsintervalle definiert werden. Liegt kein Objektabstand in einem Schutz-bereich, so kann im nächsten Zeitintervall der nächste Auswertungszyklus beginnen. Andernfalls ist der Schutzbereich verletzt und es wird im Schritt 110 ein Abschaltsignal erzeugt.

Anstelle eines Abschaltsignals im Schritt 110 kann auch lediglich ein Warnsignal erfolgen oder, etwa in der Automatisierungstechnik, der ermittelte Abstand für weitere Auswertungen verwendet werden. Im letzteren Falle dient der Sensor 10 nicht dem Schutz, sondern einer durch die Triangulation abgesicherten Entfernungsbestimmung durch Stereoskopie. Das auf Plausibilität getestete Stereoskopiebild kann anschließend für weitere Anwendungen verwendet werden.

In einer weiteren Ausführungsform der Erfindung wird nicht nur das Bild der Kamera 12, sondern auch das Bild der Kamera 12' in einem Schritt 106' bzw. 107' für eine Triangulationsauswertung verwendet. Es entsteht dann eine dreifache Redundanz, und im Schritt 108 müssen alle Objektabstände innerhalb der Toleranz liegen. Selbstverständlich muss das Bild der Kamera 12' nicht kumulativ, sondern kann auch alternativ zum Bild der Kamera 12 verwendet werden. Dies kann auch mit Teilbildern geschehen, bei denen etwa nur besonders kritische Teilbereiche doppelt trianguliert werden.

Grundsätzlich ist bei weiteren alternativen Ausführungsformen auch denkbar, dass in einer Umkehrung die Stereoskopie-Auswertung als Plausibilitätsprüfung der Triangulationsauswertung verwendet wird. Dies hat den Nachteil, dass die Triangulation nur Strukturen durch das Beleuchtungsmuster erkennt und die Stereoskopie-Auswertungseinheit feiner aufgelöst sein kann. Mit einem hinreichend fein strukturierten Beleuchtungsmuster fällt dieser Unterschied aber zumindest für manche Anwendungen nicht ins Gewicht. In diesem Fall kann dann die Auswertungsrate des Triangulationsbilds auch höher sein, als diejenige des Stereoskopiebilds.

Erfindungsgemäß entsteht durch die Beleuchtung ein ausreichender Kontrast im Überwachungsbereich 14. Die Plausibilitätsprüfung mithilfe der Triangulation kann, wenn es für das Sicherheitsniveau genügt, in größeren Zeitabständen erfolgen als die eigentliche Ansprechzeit beziehungsweise Bildwiederholrate des Bildsensors 10, um die Auswertungszeiten zu minimieren.

Damit entsteht insgesamt ein stereoskopischer Sensor 10, der gegen Manipulationen des Abstands der Kameras 12, 12' abgesichert ist und der durch eine ständige Plausibilitätsprüfung mittels eines redundanten Triangulationsverfahrens im Betrieb auf Funktionsfähigkeit überprüft wird.
Die soeben beschriebene erste Ausführungsform kombiniert die Stereoskopie mit der Triangulation. Wie einleitend beschrieben, sind weitere Messprinzipien zur Erzeugung dreidimensionaler Bilddaten bekannt, die auf Lichtlaufzeitmessungen basieren. Die Grundidee, ein Messprinzip zur dreidimensionalen Bilderfassung durch ein zweites überprüfen oder verbessern zu können, ist darüber hinaus auch noch auf beliebige und nicht nur die hier aufgeführten 3D-Bildgebungsverfahren anwendbar. Damit wird der Bildsensor schon auf einer physikalischen Ebene diversitär-redundant ausgebildet und ist damit sicher.

Es ist in allen diesen Fällen sowohl möglich, dass sich der Sensor 10 selbst überprüft, indem die dreidimensionalen Bilddaten aus den unterschiedlichen Messprinzipien miteinander verglichen werden, als auch dass ein auf mehreren Messprinzipien basierendes dreidimensionales Bild durch eine gewichtete Mittelung erzeugt wird. Das Gewicht dieser Mittelung ist ein Verlässlichkeitsmaß. Denn der Sensor 10 ist in vielen Situationen in der Lage zu erkennen, dass das eine oder andere Bildgebungsverfahren der aktuellen Szenerie nicht angemessen ist, etwa im Falle eines kontrastschwachen Bilds oder mehrdeutiger Objektkorrespondenz bei der Stereoskopie oder einer hohen Remission, die Mehrfachreflexionen erzeugt und die Ergebnisse der Lichtlaufzeitverfahren verfälscht. Daraus kann das Verlässlichkeitsmaß für die Gewichtung bei der Mittelung der dreidimensionalen Daten aus den verschiedenen Messprinzipien ermittelt werden.

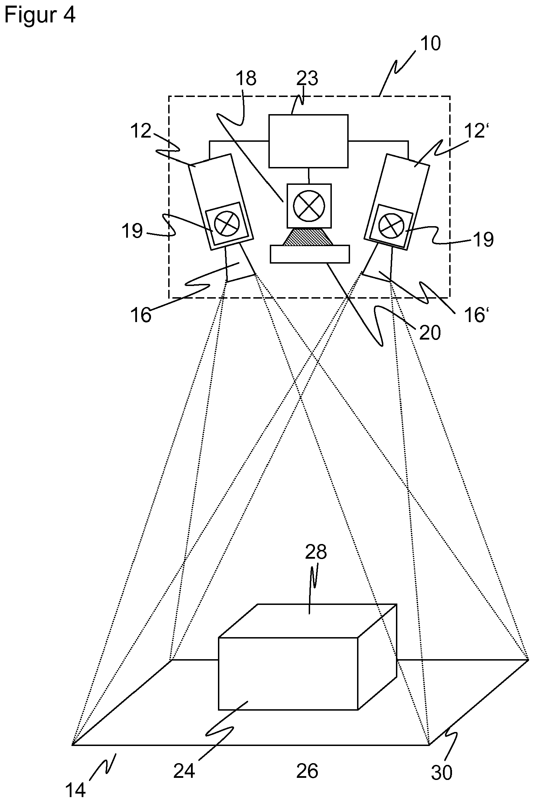

In Figur 4 ist ein weiterer beispielhafter Sensor 10 dargestellt. Hier wie im Folgenden bezeichnen gleiche Bezugszeichen die gleichen Merkmale. Im Unterschied zur ersten Ausführungsform kann bei der hier verwendeten Kombination der Messprinzipien Stereoskopie und Lichtlaufzeitverfahren auf eine strukturierte Beleuchtung verzichtet werden, die für die aktive Triangulation benötigt wird. Die Beleuchtung 18 ist dennoch eingezeichnet, weil sie optional zur Kontrasterhöhung eingesetzt werden kann.

Einer oder beide Bildsensoren 12 sind in diesem Beispiel als Lichtlaufzeitkameras ausgebildet. Sie weisen Zeilen- oder Matrixsensoren auf, die für jeden Pixel, wie einleitend beschrieben, nicht nur Grau- oder Farbbildwerte, sondern auch Entfernungswerte ausgeben, die anhand der Laufzeit von einer Beleuchtung 19 zu dem Objekt 24 und zurück zu dem Bildsensor 12 bestimmt werden. Die Lichtlaufzeit kann in jedem Pixel ("smart pixel") oder gemeinsam für alle Pixel in der Auswertungseinheit 23 erfolgen.

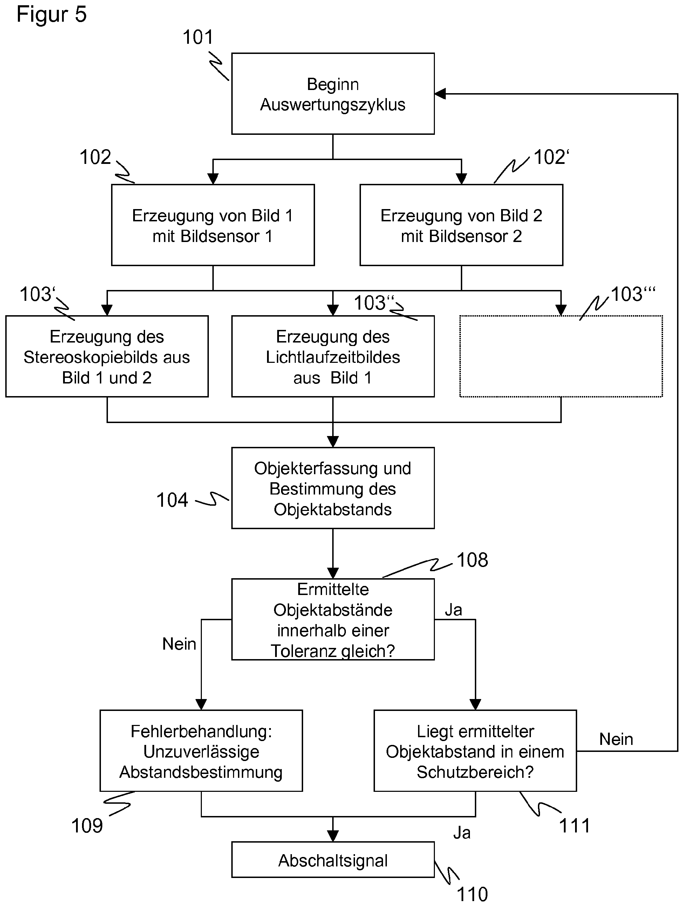

Vereinfacht ausgedrückt wird also gegenüber der ersten Ausführungsform die aktive Triangulation durch die Lichtlaufzeitkameras ersetzt. Insofern gilt bezüglich der Ausgestaltungen, besonders der Stereoskopie, das zur ersten Ausführungsform Gesagte. Dementsprechend ist auch das beispielhafte Verfahren, das in Figur 5 vereinfacht dargestellt ist, sehr ähnlich.

In jedem Auswertungszyklus 101 erzeugt in einem ersten Schritt 102, 102' jeder der Bildsensoren 12, 12' jeweils ein Bild. Wie oben beschrieben, wird aus dem Bildpaar in einem Schritt 103' mittels Disparitätsschätzung ein dreidimensionales Stereoskopiebild und parallel in einem Schritt 103" ein dreidimensionales Lichtlaufzeitbild erzeugt. Optional kann auch der zweite Bildsensor 12' als Lichtlaufzeitkamera ausgebildet sein und in einem Schritt 103''' ein zweites dreidimensionales Lichtlaufzeitbild erzeugt werden.

In einem Schritt 104 werden in allen dreidimensionalen Bildern Objekte erfasst und deren Abstand bestimmt. In einer Weiterbildung können bestimmte Objekte oder Objektbewegungen vorab als sicherheitsunkritisch eingelernt sein, die dann bei der weiteren Auswertung als bekannt vorausgesetzt und für Sicherungsmaßnahmen nicht berücksichtigt werden.

Der Vergleich der mittels der unterschiedlichen Messprinzipien ermittelten Objektabstände, die Fehlerbehandlung und die Absicherung erfolgt dann wie in der ersten Ausführungsform. Alternativ zu einem Vergleich kann auch zunächst ein gemitteltes dreidimensionales Bild anhand der im Schritt 103 ermittelten Verlässlichkeitsmaße erzeugt und darauf ein gemeinsamer Objektabstand berechnet werden.

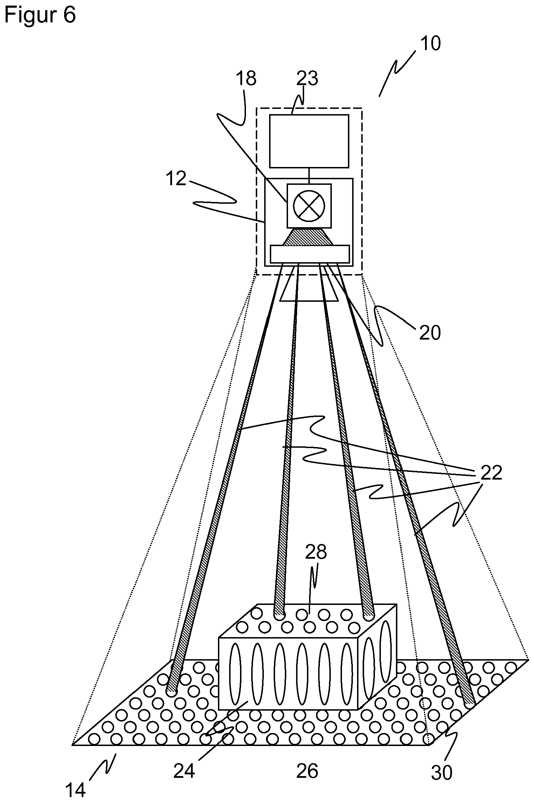

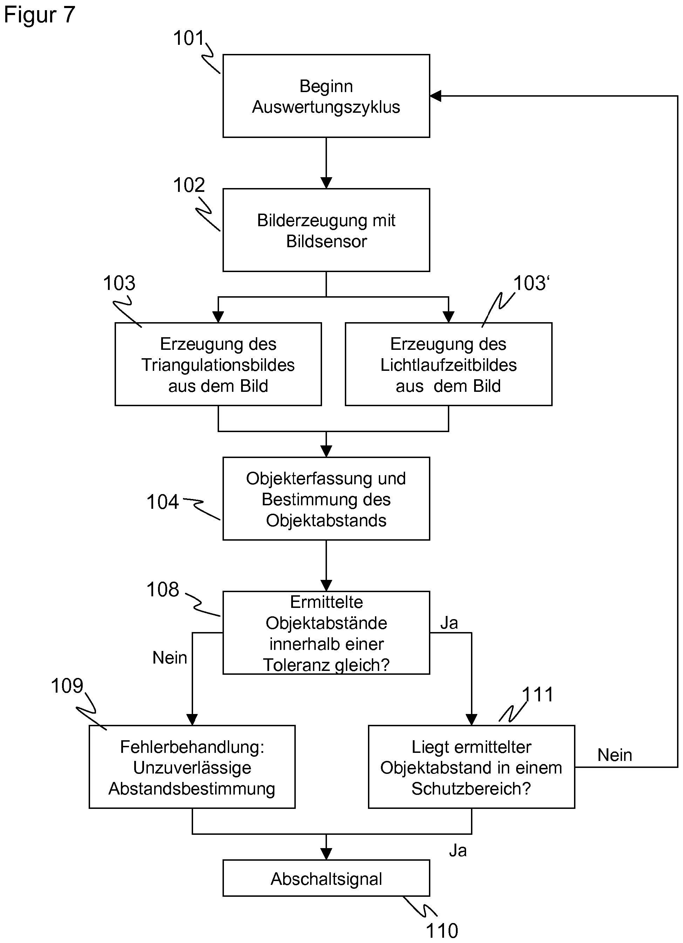

In einem weiteren Beispiel gemäß Figur 6 ist nur eine Kamera 12 vorgesehen, die einen entfernungsmessenden Bildsensor nach einem Lichtlaufzeitprinzip aufweist. Die Auswertungseinheit 23 ist hier wie in der ersten Ausführungsform dafür ausgebildet, aus dem Beleuchtungsmuster 28 der Beleuchtung 18 ein dreidimensionales Triangulationsbild zu berechnen. Die dritte Ausführungsform kombiniert also die Messprinzipien der Lichtlaufzeit mit der aktiven Triangulation. Das in Figur 7 dargestellte zugehörige Verfahren bedarf angesichts der bisherigen Erläuterungen speziell Figuren 3 und 5 keiner weiteren Beschreibung.

In den Figuren 5 und 7 wurde zur Vereinfachung die zyklische gegenseitige Überprüfung wie in Figur 3 nicht mehr dargestellt. Selbstverständlich kann auch im Fall der der Figur 5 und Figur 7 die entsprechende unterschiedliche Rate bei der Auswertung angewandt werden, also etwa ein nur zyklisches Zuschalten der aktiven Triangulation oder der Stereoskopie.

Es ist denkbar, mehr als zwei Messprinzipien nebeneinander zu verwirklichen und den Sensor 10 etwa auf einer Mischung aus Stereoskopie, Lichtlaufzeit und Triangulation basierend aufzubauen.

Der Sensor 10 kann sowohl in statischen wie in mobilen Anwendungen eingesetzt werden, also beispielsweise auch auf Fahrzeugen oder Robotern. Die hohe Dynamik der in derartigen mobilen Anwendungen überwachten Szenerien erfordert eine besonders hohe Genauigkeit der dreidimensionalen Bilddaten.

## Patentansprüche

1. Optoelektronischer Sensor (10) zur Erfassung und Abstandsbestimmung eines Objekts (24) in einem Überwachungsbereich (14) mit mindestens einem Bildsensor (12) sowie mit einer Auswertungseinheit (23), welche aus Daten des Bildsensors (12) ein dreidimensionales Bild erzeugen kann, wobei eine Erkennungseinheit (23) für die Erfassung des Objekts (24) in dem dreidimensionalen Bild und für die Ermittlung eines Abstands des Objekts (24) aus den dreidimensionalen Bilddaten ausgebildet ist, wobei Bildsensor (12) und Auswertungseinheit (23) für die Ermittlung eines ersten dreidimensionalen Bilds und eines zweiten dreidimensionalen Bildes mittels Anwendung zweier unterschiedlicher Messprinzipien ausgebildet ist, nämlich:
- es ist mindestens ein erster und ein zweiter Bildsensor (12, 12') vorgesehen, die jeweils den Überwachungsbereich (14) als ein erstes und zweites Bild abbilden können und die Auswertungseinheit (23) weist eine Stereoskopie-Auswertungseinheit auf, die aus dem ersten und dem zweiten Bild ein dreidimensionales Stereoskopiebild des Überwachungsbereichs (14) erzeugen kann und
- es ist eine Befeuchtung (18) für die Erzeugung eines strukturierten Beleuchtungsmusters vorgesehen und die Auswertungseinheit (23) weist eine Trianguiations-Auswertungseinheit (23) auf, die aus den Daten des Bildsensors (12) ein dreidimensionales Triangulationsbild des Überwachungsbereichs (14) erzeugen kann
und eine Vergleichseinheit (23) ist dafür ausgebildet, die Plausibilität des ersten dreidimensionalen Bilds anhand des zweiten dreidimensionalen Bilds zu überprüfen und/oder ein mit einem Verlässlichkeitsmaß gemitteltes dreidimensionales Bild aus dem ersten und dem zweiten dreidimensionalen Bild zu berechnen,
wobei der Sensor dafür ausgebildet ist, ein Abschaltsignal für eine von dem Sensor (10) geschützte Maschine zu erzeugen, wenn der Sensor (10) erkennt, dass ein Schutzbereich verletzt ist.

2. Sensor (10) nach Anspruch 1, **dadurch gekennzeichnet, dass** der Überwachungsbereich (14) der Absicherung eines Gefahrenbereichs oder einer Maschine dient und auf eine Objekterfassung hin die Erkennungseinheit (23) ein Warnsignal oder ein Abschaltsignal an die Maschine erzeugt, wenn der Abstand einen Mindestabstand unterschreitet oder wenn die mit dem ersten und dem zweiten Messprinzip aus den ersten und den zweiten dreidimensionalen Bilddaten bestimmten Abstände voneinander weiter als um eine vorgegebene Toleranz abweichen.

3. Sensor (10) nach Anspruch 1 oder 2, **dadurch gekennzeichnet, dass** Bildsensor (12) und Auswertungseinheit (23) im Betrieb die ersten dreidimensionalen Bilddaten mit einer ersten Rate und die zweiten dreidimensionalen Bilddaten nur einmalig zur Testung bei Inbetriebnahme des Sensors (10) erzeugen.

4. Sensor nach einem der vorhergehenden Ansprüche, **dadurch gekennzeichnet, dass** Bildsensor (12) und Auswertungseinheit (23) im Betrieb die ersten dreidimensionalen Bilddaten mit einer ersten Rate und die zweiten dreidimensionalen Bilddaten mit einer zweiten Rate kleiner der ersten Rate zur zyklischen Testung erzeugen und wobei insbesondere die zweite Rate dynamisch an das Verlässlichkeitsmaß angepasst ist.

5. Sensor nach einem der vorhergehenden Ansprüche, **dadurch gekennzeichnet, dass** eine Befeuchtung (18) für die Erzeugung eines strukturierten Beleuchtungsmusters vorgesehen ist und wobei insbesondere das Beleuchtungsmuster eines der Folgenden ist: eine Vielzahl von matrixförmig angeordneten Punkten oder Kreisen, eine Vielzahl von linien, ein Gittermuster oder ein Schachbrett.

6. Sensor nach einem der vorhergehenden Ansprüche, **dadurch gekennzeichnet, dass** die Beleuchtung (18) außerhalb der Achse zwischen erstem und zweitem Bildsensor (12, 12') angeordnet ist und/oder wobei die Beleuchtung (18) mindestens einen Laser oder mindestens eine Leuchtdiode als Lichtquelle aufweist, wobei der Lichtquelle insbesondere ein diffraktives optisches Element (20) zur Erzeugung des Beleuchtungsmusters nachgeordnet ist.

7. Sensor nach Anspruch 6, **dadurch gekennzeichnet, dass** als Lichtquelle ein Laserstack vorgesehen ist, der eine Vielzahl in einer ersten Achse nebeneinander liegender Laserstrahlen erzeugen kann und wobei jedem Laserstrahl jeweils ein oder ein gemeinsames diffraktives optisches Element (20) zugeordnet ist, das in einer zweiten Achse im Wesentlichen senkrecht zu der ersten Achse jeweils einen Streifen des Beleuchtungsmusters erzeugt.

8. Verfahren zur Erfassung und Abstandsbestimmung eines Objekts (24) in einem Überwachungsbereich (14), weiches folgende Schritte aufweist:
- Abbilden des Überwachungsbereichs in mindestens einem Bild,
- Ermitteln eines dreidimensionalen Bilds aus dem Bild,
- Erfassen des Objekts (24) und Ermitteln eines Abstands des Objekts (24) aus den dreidimensionalen Bilddaten,
wobei ein erstes dreidimensionales Bild und ein zweites dreidimensionales Bild mittels zwei unterschiedlichen Messprinzipien ermittelt wird, nämlich:
- es wird mindestens ein erstes und ein zweites Bild des Überwachungsbereichs (14) aufgenommen und aus dem ersten und dem zweiten Bild ein dreidimensionales Stereoskopiebild des Überwachungsbereichs (14) erzeugt und
- der Überwachungsbereich (14) wird mit einem strukturierten Beleuchtungsmuster beleuchtet und ein dreidimensionales Triangulationsbild des Überwachungsbereichs (14) erzeugt,
wobei die Piausibilität des ersten dreidimensionalen Bilds anhand des zweiten dreidimensionalen Bilds überprüft und/oder ein mit einem Verlässlichkeitsmaß gemitteltes dreidimensionales Bild aus dem ersten und dem zweiten dreidimensionalen Bild berechnet wird und wobei ein Abschaltsignal für eine von dem Sensor (10) geschützte Maschine erzeugt wird, wenn erkannt wird, dass ein Schutzbereich verletzt ist.

9. Verfahren nach Anspruch 8, **dadurch gekennzeichnet, dass** der Überwachungsbereich (14) der Absicherung eines Gefahrenbereichs oder einer Maschine dient und auf eine Objekterfassung in dem ersten oder dem zweiten dreidimensionalen Bild hin ein Warnsignal oder ein Abschaltsignal an die Maschine erzeugt wird, wenn der Abstand einen Mindestabstand unterschreitet oder wenn die mit dem ersten und dem zweiten Messprinzip aus den ersten und den zweiten dreidimensionalen Bilddaten bestimmten Abstände voneinander weiter als um eine vorgegebene Toleranz abweichen.

## Claims

1. An optoelectronic sensor (10) for detecting and determining the distance of an object (24) in a monitoring region (14), the sensor (10) having at least one image sensor (12) and having an evaluation unit (23) which can generate a three-dimensional image from data from the image sensor (12), wherein a recognition unit (23) is arranged for detecting the object (24) in the three-dimensional image and for determining a distance of the object (24) from the three-dimensional image data, wherein the image sensor (12) and the evaluation unit (23) are arranged for determining a first three-dimensional image and a second three-dimensional image by applying two different measuring principles, namely:
- at least a first and a second image sensor (12, 12') are provided which can respectively image the monitoring area (14) as a first and a second image, and the evaluation unit (23) has a stereoscopy evaluation unit which can generate a three-dimensional stereoscopy image of the monitoring area (14) from the first and the second image, and
- an illumination (18) is provided for generating a structured illumination pattern, and the evaluation unit (23) has a triangulation evaluation unit (23) which can generate a three-dimensional triangulation image of the monitoring area (14) from the data of the image sensor (12)
and a comparison unit (23) is adapted to check the plausibility of the first three-dimensional image based on the second three-dimensional image and/or to calculate a three-dimensional image averaged with a reliability measure from the first and second three-dimensional images,
wherein the sensor is adapted to generate a shutdown signal for a machine protected by the sensor (10) when the sensor (10) detects that a protected area is violated.

2. The sensor (10) according to claim 1,
**characterized in that** the monitoring area (14) is used to secure a danger zone or a machine and, in response to object detection, the recognition unit (23) generates a warning signal or a switch-off signal to the machine if the distance falls below a minimum distance or if the distances determined using the first and second measuring principles from the first and second three-dimensional image data deviate from one another further than by a predetermined tolerance.

3. The sensor (10) according to claim 1 or 2,
**characterized in that** the image sensor (12) and evaluation unit (23) generate the first three-dimensional image data during operation at a first rate and the second three-dimensional image data only once for testing when the sensor (10) is put into operation.

4. The sensor according to one of the preceding claims,
**characterized in that** the image sensor (12) and evaluation unit (23) in operation generate the first three-dimensional image data at a first rate and the second three-dimensional image data at a second rate lower than the first rate for cyclic testing, and wherein in particular the second rate is dynamically adapted to the reliability measure.

5. The sensor according to one of the preceding claims,
**characterized in that** an illumination (18) is provided for generating a structured illumination pattern and wherein in particular the illumination pattern is one of the following: a plurality of matrix-shaped points or circles, a plurality of lines, a grid pattern or a chessboard.

6. The sensor according to one of the preceding claims,
**characterized in that** the illumination (18) is arranged outside the axis between the first and second image sensor (12, 12') and/or wherein the illumination (18) has at least one laser or at least one light-emitting diode as a light source, wherein in particular a diffractive optical element (20) for generating the illumination pattern is arranged in front of the light source.

7. The sensor according to claim 6,
**characterized in that** a laser stack is provided as the light source which can generate a plurality of laser beams arranged side by side in a first axis, and wherein one respective or a common diffractive optical element (20) is assigned to a respective laser beam which generates a respective strip of the illumination pattern in a second axis substantially perpendicular to the first axis.

8. A method for detecting and determining the distance of an object (24) in a monitoring area (14) comprising the following steps:
- imaging the monitoring area in at least one image,
- determining a three-dimensional image from the image,
- detecting the object (24) and determining a distance of the object (24) from the three-dimensional image data,
wherein a first three-dimensional image and a second three-dimensional image are determined by means of two different measuring principles, namely:
- at least a first and a second image of the monitoring region (14) are acquired and a three-dimensional stereoscopic image of the monitoring region (14) is generated from the first and the second image, and
- the monitoring region (14) is illuminated with a structured illumination pattern and a three-dimensional triangulation image of the monitoring region (14) is generated,
wherein the plausibility of the first three-dimensional image is checked based on the second three-dimensional image and/or a three-dimensional image is calculated from the first and the second three-dimensional image averaged with a reliability measure, and wherein a switch-off signal for a machine protected by the sensor (10) is generated when it is detected that a protected area has been violated.

9. The method according to claim 8,
**characterized in that** the monitoring area (14) is used to secure a danger area or a machine and, in response to object detection in the first or second three-dimensional image, a warning signal or a switch-off signal is generated to the machine if the distance falls below a minimum distance or if the distances determined using the first and second measuring principles from the first and second three-dimensional image data deviate from one another further than by a predetermined tolerance.

## Revendications

1. Capteur optoélectronique (10) pour détecter et déterminer la distance d'un objet (24) dans une zone à surveiller (14), comportant au moins un capteur d'image (12) ainsi qu'une unité d'évaluation (23) apte à générer une image tridimensionnelle à partir des données du capteur d'mage (12), dans lequel il est prévu une unité de reconnaissance (23) pour détecter l'objet (24) dans l'image tridimensionnelle et pour déterminer une distance de l'objet (24) à partir des données d'image tridimensionnelle, le capteur d'image (12) et l'unité d'évaluation (23) sont réalisés pour déterminer une première image tridimensionnelle et une seconde image tridimensionnelle par application de deux principes de mesure différents que sont :
- il est prévu au moins un premier et un second capteur d'image (12, 12') qui sont chacun aptes à imager la zone à surveiller (14) en tant que première et seconde image, et l'unité d'évaluation (23) comprend une unité d'évaluation stéréoscopique qui est apte à générer une image stéréoscopique tridimensionnelle de la zone à surveiller (14) à partir de la première et de la seconde image, et
- il est prévu un éclairage (18) pour générer un motif d'éclairage structuré, et l'unité d'évaluation (23) comprend une unité d'évaluation de triangulation (23) qui est apte à générer une image de triangulation tridimensionnelle de la zone à surveiller (14) à partir des données du capteur d'image (12), et une unité de comparaison (23) est réalisée pour vérifier la plausibilité de la première image tridimensionnelle en se basant sur la seconde image tridimensionnelle et/ou pour calculer une image tridimensionnelle, moyennée avec un taux de fiabilité, à partir de la première et de la seconde image tridimensionnelle, et
le capteur est réalisé pour générer un signal de coupure pour une machine protégée par le capteur (10), lorsque le capteur (10) reconnaît qu'une zone de protection est violée.

2. Capteur (10) selon la revendication 1, **caractérisé en ce que** la zone à surveiller (14) sert à sécuriser une zone dangereuse ou une machine, et suite à la détection d'un objet, l'unité de reconnaissance (23) émet un signal d'alerte ou un signal de coupure à la machine lorsque la distance passe au-dessous d'une distance minimale ou lorsque les distances déterminées par le premier et par le second principe de mesure à partir des premières et des secondes données d'image tridimensionnelle diffèrent l'une de l'autre de plus d'une tolérance donnée.

3. Capteur (10) selon la revendication 1 ou 2, **caractérisé en ce que** le capteur d'image (12) et l'unité d'évaluation (23) génèrent les premières données d'image tridimensionnelle avec un premier débit pendant le fonctionnement, et ils ne génèrent les secondes données d'image tridimensionnelle qu'une seule fois pour effectuer un test lors de la mise en service du capteur (10).

4. Capteur selon l'une des revendications précédentes, **caractérisé en ce que** le capteur d'image (12) et l'unité d'évaluation (23) génèrent les premières données d'image tridimensionnelle avec un premier débit pendant le fonctionnement, et ils génèrent les secondes données d'image tridimensionnelle avec un second débit inférieur au premier débit en vue d'un test cyclique, et en particulier le second débit est adapté dynamiquement au taux de fiabilité.

5. Capteur selon l'une des revendications précédentes, **caractérisé en ce que** il est prévu un éclairage (18) pour générer un motif d'éclairage structuré, et en particulier le motif d'éclairage est l'un parmi les suivants : une multitude de points ou de cercles agencés en forme de matrice, une multitude de lignes, un motif en grille ou un motif en damier.

6. Capteur selon l'une des revendications précédentes, **caractérisé en ce que** l'éclairage (18) est agencé à l'extérieur de l'axe entre le premier et le second capteur d'image (12, 12') et/ou l'éclairage (18) comprend au moins un laser ou au moins une diode électroluminescente à titre de source de lumière, et en particulier un élément optique diffractif (20) pour générer le motif d'éclairage est agencé en aval de la source lumineuse.

7. Capteur selon la revendication 6, **caractérisé en ce que** en tant que source de lumière, il est prévu un empilement de lasers qui est apte à générer une multitude de faisceaux lasers situés les uns à côté des autres le long d'un premier axe, et un élément optique diffractif respectif ou commun (20) est associé à chaque faisceau laser, qui génère un ruban respectif du motif d'éclairage le long d'un second axe sensiblement perpendiculaire au premier axe.

8. Procédé pour détecter et déterminer la distance d'un objet (24) dans une zone à surveiller (14), comprenant les étapes suivantes consistant à :
- imager la zone à surveiller dans au moins une image,
- déterminer une image tridimensionnelle à partir de l'image,
- détecter l'objet (24) et déterminer une distance de l'objet (24) à partir des données d'image tridimensionnelle,
dans lequel
une première image tridimensionnelle et une seconde image tridimensionnelle sont déterminées par deux principes de mesure différents que sont :
- au moins une première et une seconde image sont prises de la zone à surveiller (14), et une image stéréoscopique tridimensionnelle de la zone à surveiller (14) est générée à partir de la première et de la seconde image, et
- la zone à surveiller (14) est éclairée avec un motif d'éclairage structuré, et une image de triangulation tridimensionnelle est générée de la zone à surveiller (14),
la plausibilité de la première image tridimensionnelle est vérifiée en se basant sur la seconde image tridimensionnelle et/ou une image tridimensionnelle, moyennée avec un taux de fiabilité, est calculée à partir de la première et de la seconde image tridimensionnelle, et
un signal de coupure est généré pour une machine protégée par le capteur (10), lorsqu'il est reconnu qu'une zone de protection est violée.

9. Procédé selon la revendication 8, **caractérisé en ce que** la zone à surveiller (14) sert à sécuriser une zone dangereuse ou une machine, et suite à la détection d'un objet dans la première ou dans la seconde image tridimensionnelle, un signal d'alerte ou un signal de coupure est émis à la machine lorsque la distance passe au-dessous d'une distance minimale ou lorsque les distances déterminées par le premier et par le second principe de mesure à partir des premières et des secondes données d'image tridimensionnelle diffèrent l'une de l'autre de plus d'une tolérance donnée.
